(19) Europäisches Patentamt
European Patent Office
Office européen des brevets

(11) Numéro de publication: **0 449 751 B1**

(12) **FASCICULE DE BREVET EUROPEEN**

(45) Date de publication du fascicule du brevet: **22.11.95**

(51) Int. Cl.$^6$: **A01N 47/30**, A01N 47/36, //(A01N47/36,33:22), (A01N47/30,33:22)

(21) Numéro de dépôt: **91420088.6**

(22) Date de dépôt: **18.03.91**

# (54) Association herbicide comprenant l'aclonifen et au moins une urée substituée.

(30) Priorité: **20.03.90 FR 9003782**

(43) Date de publication de la demande: **02.10.91 Bulletin 91/40**

(45) Mention de la délivrance du brevet: **22.11.95 Bulletin 95/47**

(84) Etats contractants désignés: **AT BE CH DE DK ES FR GB GR IT LI LU NL SE**

(56) Documents cités:
**EP-A- 0 007 482**
**EP-A- 0 163 598**
**EP-A- 0 185 231**
**EP-A- 0 342 134**

(73) Titulaire: **RHONE-POULENC AGROCHIMIE**
**14-20, rue Pierre Baizet**
**F-69009 Lyon (FR)**

(72) Inventeur: **Bernard, Thierry**
**5, chemin du Calvaire**
**F-69570 Dardilly (FR)**
Inventeur: **Millet, Jean-Claude**
**Les Marronniers,**
**Charrière Blanche**
**F-69130 Ecully (FR)**
Inventeur: **Rognon, Jacques**
**31, rue de Lattre de Tassigny**
**F-69009 Lyon (FR)**

(74) Mandataire: **Chrétien, François et al**
**RHONE-POULENC AGROCHIMIE- DPI**
**B.P. 9163**
**F-69263 Lyon Cédex 09 (FR)**

EP 0 449 751 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne un produit herbicide résultant de l'association des urées substituées herbicides éventuellement en mélange et d'aclonifen convenant de façon remarquable au contrôle sélectif des mauvaises herbes dans les cultures.

L'invention concerne également l'utilisation du nouveau produit à titre d'herbicide, notamment sous la forme de composition et un procédé pour contrôler les mauvaises herbes dans les cultures à l'aide du produit ou de la composition.

Les urées substituées sont utilisées depuis longtemps dans le désherbage des zones de culture. Parmi celles-ci, on peut citer à titre indicatif :

- l'isoproturon ou N,N-diméthyl-N'-(4-isopropylphényl)-urée pour le désherbage des champs de céréales notamment,
- le chlortoluron ou N,N diméthyl-N'-(3-chloro-4-méthylphényl)-urée pour le désherbage des champs de céréales notamment,
- le diméfuron ou N,N-diméthyl-N'-[3-chloro-4-(5-tertiobutyl-2-oxo-2,3-dihydro 1,3,4 oxadiazolyl-3-yl) phényl] urée pour le désherbage des champs de pois et de colza,
- le néburon ou N-méthyl-N-n-butyl-N'-(3,4-dichlorophényl)-urée pour le désherbage des champs de céréales notamment,
- le linuron ou N-méthyl-N-méthoxy-N'-(3,4-di chlorophényl)-urée pour le désherbage des champs de maïs, de tournesol notamment.
- le méthabenzthiazuron ou 1-benzothiazolyl-2-yl-1,3-diméthylurée pour le désherbage notamment des céréales, du haricot et du pois.

On connait par ailleurs l'aclonifen ou 2-chloro 6-nitro 3-phénoxy aniline qui est un herbicide sélectif des cultures de tournesol, de pois, et qui est normalement utilisé à des doses supérieures à 2 kg/ha.

La demande de brevet européen EP 163598 décrit des formulations particulières comprenant au moins une urée substituée herbicide et éventuellement un autre herbicide. L'aclonifen est cité, dans une liste de très nombreuses matières actives herbicides possibles .

La demande de brevet européen EP 185231 mentionne page 17 un produit associant du linuron avec de l'aclonifen, ces 2 matières actives étant combinées dans un rapport aclonifen/linuron égal à 0,4.

La demande de brevet européen EP 7482 mentionne une éventuelle combinaison de l'aclonifen avec un autre herbicide connu, et cite le linuron.

Il est toujours souhaitable d'améliorer l'action des matières actives herbicides.

L'invention propose ainsi quant à elle une nouvelle association qui résulte d'un choix limité effectué parmi un nombre pratiquement infini de possibilités et qui procure des avantages importants qui seront mieux compris à la lumière de ce qui va être décrit ci-après.

Il a été trouvé ainsi de manière parfaitement inattendue que l'association améliorait de façon notable et surprenante l'action respective et isolée des deux matières actives pour un certain nombre d'adventices particulièrement nuisibles dans les cultures. Cela, tout en conservant la sélectivité vis à vis des cultures. Il en découle donc une amélioration du spectre d'activité et une possibilité de diminuer la dose respective de chaque matière active utilisée, cette dernière qualité étant particulièrement importante pour des raisons écologiques aisément compréhensibles.

Ainsi, l'association présente un remarquable degré de synergisme comme c'est défini par PML Tammes, Netherlands Journal of Plant Pathology, 70 (1964), p. 7380 dans un article intitulé "Isoboles, une représentation graphique de synergie dans les pesticides" ou comme défini par Limpel, L.E., P.H. Schuldt and D. Lamont, 1962, Proc. NEWCC 16:48-53, selon la formule (utilisée par COLBY) :

$$E = X + Y - \frac{XY}{100}$$

où E est le pourcentage attendu d'inhibition de la croissance par un mélange des deux herbicides à des doses définies, X est le pourcentage d'inhibition observé de la croissance par l'herbicide A à une dose définie, Y est le pourcentage d'inhibition observé de la croissance par l'herbicide B à une dose définie. Quand le pourcentage d'inhibition observé de l'association est plus grand que E il y a synergie.

En outre, il a été trouvé de manière totalement inattendue que l'aclonifen, à une dose qui en soi n'est pas herbicide d'un point de vue industriel (c'est-à-dire avec une efficacité nulle ou insuffisante), potentialisait ou amplifiait considérablement l'effet herbicide des uréees substituées. Il s'agit donc dans ce cas d'une innovation notable quant à ses conséquences sur les méthodes d'emploi desdites urées.

L'invention concerne un produit résultant de l'association de :

a) l'aclonifen,

b) d'une ou plusieurs urées substituées de formule

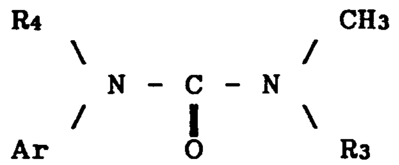

(I)

dans laquelle Ar est un noyau de formule

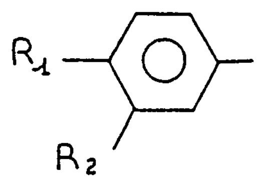

$R_1$ étant choisi parmi les radicaux ($C_1$-$C_3$) alkyle, ($C_1$-$C_3$) alkoxy, l'atome de chlore, de brome, un groupe 5-ter-butyl-2,3-dihydro-2-oxo-1,3,4-oxadiazol-3-yl de formule

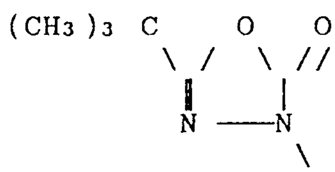

$R_2$ étant choisi parmi l'atome d'hydrogène, l'atome de chlore,

où Ar est un noyau

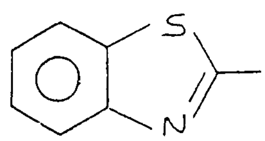

$R_3$ est l'atome d'hydrogène, le radical ($C_1$-$C_4$ ) alkyle, méthoxy,

$R_4$ est l'atome d'hydrogène ou le radical méthyle; le rapport a)/b) étant compris entre 0,033 et 0,333 (exprimé en poids/poids).

Lorsque les radicaux alkyle ou alcoxy comprennent au moins trois atomes de carbone, ils peuvent être linéaires ou ramifiés.

Parmi les urées substituées de formule (I), on peut citer tout particulièrement :

l'isoproturon ou 3-(4-isopropylphényl)-1,1-diméthylurée,

le chlortoluron ou 3-(3-chloro-p-tolyl)-1,1-diméthylurée,

le néburon ou 1-butyl-3-(3,4-dichlorophényl)-1-méthylurée,

le diuron ou 3-(3,4-dichlorophényl)-1,1-diméthylurée,

le metoxuron ou 3-(3-chloro-4-méthoxyphényl)-1,1 diméthylurée,

le linuron ou 3-(3,4-dichlorophényl)-1-méthoxy-1-méthylurée,

le monolinuron ou 3-(4-chlorophényl)-1-méthoxy-1-méthylurée,

le méthabenzthiazuron ou 1-benzothiazol-2-yl-1,3-diméthylurée,

le métobromuron ou 3-(4-bromophényl)-1-méthoxy-1-méthylurée,

le diméfuron ou 3-[4-(5-ter-butyl-2,3-dihydro-2-oxo-1,3,4-oxadiazol-3-yl)-3-chlorophényl-1,1-diméthylurée.

On utilisera de façon encore plus avantageuse, compte tenu des problèmes précédemment évoqués que l'invention se propose de résoudre :

l'isoproturon ou 3-(4-isopropylphényl)-1,1-diméthylurée,

le chlortoluron ou 3-(3-chloro-p-tolyl)-1,1-diméthylurée.

le méthabenzthiazuron ou 1-benzothiazolyl-2-yl-1,3-diméthylurée pour le désherbage notamment des céréales, du haricot et du pois.

Ces produits peuvent être utilisés à titre d'herbicide dans la gamme de rapport en poids aclonifen-urée pré-citée et selon les cultures traitées, les conditions climatiques, la nature du sol, le stade de traitement des adventices majoritaires à l'endroit concerné, et même éventuellement le souhait de l'utilisateur selon qu'il veuille un terrain parfaitement propre ou qu'il se contente d'un désherbage satisfaisant mais non total.

Ces produits selon l'invention sont destinés à une utilisation simultanée, séparée ou étalée dans le temps pour le traitement herbicide des végétaux indésirables, notamment contre les adventices présentes dans les cultures. La nature des cultures concernées peut varier selon l'urée considérée. On reviendra sur ce point dans la partie réservée au procédé de traitement ci-après.

Dans le cas d'une utilisation simultanée (qui est préférée), on peut utiliser des produits prêts à l'emploi contenant l'association des matières actives décrites plus haut. On peut également utiliser des produits préparés juste avant l'emploi, par mélange extemporanné des matières actives commes elles sont décrites ci-après.

L'utilisation peut également utiliser le produit en traitant les cultures à protéger successivement par l'une puis l'autre des matières actives aclonifen et urées, de manière à former in situ sur la plante le produit selon l'invention.

Les associations sont le plus souvent de type binaire, mais on peut envisager quelquefois des associations ternaires ou quaternaires avec un ou plusieurs autres pesticides compatibles (y compris fongicide ou insecticide).

Comme cela a été indiqué auparavant, l'un des problèmes, que la déposante se propose de résoudre, est d'amplifier l'action des urées. Dans ce cas, l'aclonifen joue le rôle de potentialisateur, ou dans le jargon propre au métier de la protection des cultures, de "synergiste".

Ainsi le produit se définit comme un produit herbicide à base d'urée comprenant comme amplificateur en soi non herbicide à la dose considérée, l'aclonifen.

Bien évidemment, les variantes préférées en ce qui concerne les urées selon l'invention, sont également valables dans la présente utilisation. Aussi l'on comprendra que également dans le cas de l'aclonifen comme amplificateur, le chlortoluron et l'isoproturon seront avantageusement utilisés.

L'utilisation des produits selon l'invention s'effectue la plupart du temps sous forme de composition herbicide comportant un ou plusieurs supports acceptables en agriculture et/ou un ou plusieurs agents tensio actifs.

Dans le cas de préparations extemporannées, chaque matière active peut être sous la forme d'une composition. Par contre, dans le cas d'un mélange prêt à l'emploi, c'est l'association elle-même qui se trouve sous la forme d'une composition.

Dans l'exposé qui va suivre, on parlera indifféremment de la matière active ou d'association.

Parfois, compte tenu des formulations disponibles sur le marché, il est possible de disposer aisément d'une composition prête à l'emploi contenant l'association.

Parfois, une formulation adéquate, à la portée de l'homme de métier, sera nécessaire.

Ainsi, dans la description générale qui va suivre, le terme "composition" servira indistinctement à décrire les deux compositions comprenant les deux matières actives séparées ou la composition comprenant l'association.

Ces associations utilisables contiennent en plus de la matière active ou de l'association selon l'invention telle que décrite précédemment, les supports solides ou liquides, acceptables en agriculture et les agents tensio-actifs également acceptables en agriculture. En particulier, sont utilisables les supports inertes et usuels et les agents tensio-actifs usuels.

Ces compositions contiennent habituellement entre 0,5 et 95 % de matière active ou d'association selon l'invention. Les pourcentages sont sauf mention contraire en poids.

Par le terme "support", dans le présent exposé, on désigne une matière organique ou minérale, naturelle ou synthétique, avec laquelle la matière active est associée pour faciliter son application sur la plante, sur des graines ou sur le sol. Ce support est donc généralement inerte et il doit être acceptable en agriculture, notamment sur la plante traitée. Le support peut être solide (argiles, silicates naturels ou synthétiques, silice, résines, cires, engrais solides, etc...) ou liquide (eau, alcools, cétones, fractions de pétrole, hydrocarbures aromatiques ou paraffiniques, hydrocarbures chlorés, gaz liquéfiés, etc...).

L'agent tensioactif peut être un agent émulsionnant, dispersant ou mouillant de type ionique. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés. La présence d'au moins un agent tensioactif est indispensable car les matières actives (aclonifen + urée) ne sont pas solubles dans l'eau et que l'agent vecteur de l'application est l'eau.

Comme formes de compositions agricoles, on peut citer les poudres pour poudrage ou dispersion (à teneur en matière active ou en association selon l'invention pouvant aller jusqu'à 100 %) et les granulés, notamment ceux obtenus par extrusion, par compactage, par imprégnation d'un support granulé, par granulation à partir d'une poudre (la teneur en matière active ou en association selon l'invention dans ces granulés étant entre 1 et 80 % pour ces derniers cas).

Comme formes de compositions liquides ou destinées à constituer des compositions liquides lors de l'application, on peut citer les concentrés émulsionnables, les émulsions, les suspensions concentrées, les aérosols, les poudres mouillables (ou poudre à pulvériser), les pâtes.

Les concentrés émulsionnables ou solubles comprennent le plus souvent 10 à 80 % de matière active, les émulsions contenant, quant à elles, 0,01 à 20 % de matière active. Les suspensions concentrées contiennent en général 10 à 75 % de matière active, de 0,5 à 15 % d'agent tensio actifs, de 0,1 à 10 % d'agents thixotropes et de 0 à 10 % d'additifs appropriés comme des antimousses, des inhibiteurs de corrosion, des stabilisants, des agents de pénétration.

D'ailleurs, en général, ces compositions peuvent contenir aussi toute sorte d'autres ingrédients tels que, par exemple, des colloïdes thixotropes, des agents de pénétration, des stabilisants, des séquestrants, etc ... ainsi que d'autres matières actives connues à propriétés pesticides (notamment insecticides ou fongicides) ou à propriétés favorisant la croissance des plantes (notamment des engrais) ou à propriétés régulatrices de la croissance des plantes. Plus généralement, les composés selon l'invention peuvent être associés à tous les additifs solides ou liquides correspondant aux techniques habituelles de la mise en formulation.

Par exemple, en plus du solvant, les concentrés émulsionnables peuvent contenir quand c'est nécessaire, 2 à 20 % d'additifs appropriés comme les stabilisants, les agents tensio-actifs, les agents de pénétration, les inhibiteurs de corrosion, les colorants oiu les adhésifs précédemment cités.

Concrètement pour les matières actives considérées :

l'aclonifen est présent sur le marché comme suspension concentrée à 600 g/l de matière active,

l'isoproturon est également présent sur le marché comme suspension concentrée entre 440 et 500 g/l de matière active,

le chlortoluron peut être trouvé sous forme de suspension concentrée (entre 500 et 510 g/l de matière active) de poudres mouillables, granulés, microgranules.

L'homme de métier saura aisément mettre en oeuvre une composition à base d'une association de ces matières actives sous la forme par exemple d'une suspension concentrée. C'est d'ailleurs la forme préférée de l'invention.

Procédé de traitement selon l'invention :

L'invention concerne également un procédé pour contrôler les mauvaises herbes spécialement en milieu où poussent des cultures ou sont destinées à pousser des cultures, qui consiste à appliquer une dose efficace de produit (ou une composition le contenant), tel qu'il vient d'être décrit précédemment.

Lors de l'application, la dose devrait être suffisante pour contrôler la croissance des adventices sans causer de dommages substantiels permanents auxdites cultures. Par dose efficace, on entend justement dans ce contexte la dose qui permet d'obtenir ce résultat.

L'application est effectuée en post levée des cultures. On entend désigner par post levée l'application du produit après émergence du sol de la plante.

Le produit (ou composition) selon l'invention est surtout actif contre les adventices après que celles-ci aient levé bien qu'une action de pré-levée, c'est-à-dire alors que la plante n'a pas encore émergé du sol, soit également possible.

L'action du produit (ou composition) est foliaire et racinaire dans des proportions qui peuvent varier selon les matières actives considérées.

Normalement le produit (qui peut être appliqué en utilisation simultanée, séparée ou étalée dans le temps) sera appliqué à une dose allant de 460 g/ha à 5000 g/ha.

Parmi les mauvaises herbes qui peuvent contrôlées par ledit produit (ou ladite composition), on peut citer :

Galium aparine, Avena fatua, Lolium multiflorum, Viola tricolor, Sinapis alba, Lamium purpurea, Veronica persica, Agrostis tenuis, Alopecurus myosuroïdes, Veronica haederefolia.

Selon les variantes préférées suivantes :

- L'association isoproturon-aclonifen sera appliquée sur céréales comme le blé, l'orge notamment. La dose par hectare sera avantageusement de
  - 60 à 600 g/ha d'aclonifen,
  - 400 à 3 600 g/ha d'isoproturon,

  très avantageusement :
  - 100 à 500 g/ha d'aclonifen,
  - 500 à 3 000 g/ha d'isoproturon.
- L'association chlortoluron-aclonifen sera appliquée sur céréales comme le blé, l'orge notamment. La dose par hectare sera avantageusement de :
  - 60 à 600 g/ha d'aclonifen,
  - 400 à 3 600 g/ha de chlortoluron,

  très avantageusement :
  - 100 à 500 g/ha d'aclonifen,
  - 500 à 3 000 g/ha de chlortoluron.
- L'association diméfuron-aclonifen sera appliquée sur pois et colza notamment. La dose par hectare sera notamment de :
  - 60 à 600 g/ha d'aclonifen,
  - 400 à 3 600 g/ha de diméfuron,

  très avantageusement :
  - 100 à 500 g/ha d'aclonifen,
  - 500 à 2 000 g/ha de diméfuron.
- L'association aclonifen méthabenzthiazuron sera appliquée sur blé d'hiver et orge d'hiver notamment.
  La dose par hectare sera notamment de
  - 60 à 1 000 g/ha d'aclonifen
  - 500 à 4 000 g/ha de méthabenzthiazuron

  et trés avantageusement :
  - 100 à 500 g/ha d'aclonifen
  - 1 000 à 3 000 g/ha de méthabenzthiazuron

L'invention va maintenant être décrite par rapport à des exemples concrets de réalisation qui ne sont bien entendu donnés qu'à titre indicatif ne pouvant en aucune façon limiter la portée de ladite invention.

Afin de simplifier la méthode et parvenir à une meilleure base de comparaison, on a choisi :

- Galium aparine,
- Avena fatua,
- Lolium multiflorum,
- Viola tricolor,
- Sinapis alba,
- Lamium purpurea,
- Veronica persica,
- Agrostis tenuis,
- Alopecurus myosuroïdes,
- Stellaria media

pour montrer l'activité du produit sur les mauvaises herbes du blé et montrer la sélectivité du produit sur cette culture.

Mode expérimental général:

L'application est effectuée en post levée des espèces végétales.

Dans des pots de 9 X 9 X 9 cm remplis de terre agricole légère, on sème un nombre de graines déterminé en fonction de l'espèce végétale et de la grosseur de la graine.

On recouvre ensuite les graines d'une couche de terre d'environ 3 mm d'épaisseur et on laisse germer la graine jusqu'à ce qu'elle donne naissance à une plantule au stade convenable. Le stade de traitement pour les herbes est le stade de "deuxième feuille en formation". Le stade de traitement pour les dicotylédones, est le stade "cotylédons étalés, première feuille vraie en développement".

Les pots sont alors traités par pulvérisation de bouillie en quantité correspondant à une dose volumique d'application de 500 l/ha et contenant les matières actives à pulvériser.

Les bouillies sont obtenues par dilution dans l'eau des produits formulés.

On a utilisé les produits formulés suivants :

- Aclonifen suspension concentrée à 600 g/l "Challenge 600"(R),
- Isoproturon suspension concentrée à 500 g/l "Augur" (R),
- Chlortoluron suspension concentrée à 500 g/l "Dicuran" (R),
- Diméfuron suspension concentrée à 400 g/l "Surdone"(R).

Ces formulations sont dûment homologués et bien connues dans l'art.

Les pots sont alors placés dans des bacs destinés à recevoir l'eau d'arrosage, en subirrigation, et maintenus pendant 24 jours à température ambiante sous 60 % d'humidité relative.

Au bout de 24 jours, on compte le nombre de plantes vivantes dans les pots traités par la bouillie contenant la matière active à tester et le nombre de plantes vivantes dans un pot témoin traité selon les mêmes conditions, mais au moyen d'une bouillie ne contenant pas de matière active. On détermine ainsi le pourcentage de destruction des plantes traitées par rapport au témoin non traité. Un pourcentage de destruction égal à 100 % indique qu'il y a eu destruction complète de l'espèce végétale considérée et un pourcentage de 0 % indique que le nombre de plantes vivantes dans le pot traité est identique à celui dans le pot témoin. Pour les exemples 1 à 16, les unités sont en g/ha dans les tableaux (1ère ligne et 1ère colonne).

Exemple 1 :

Essai montrant la nature de l'effet synergique biologique de l'association de l'isoproturon et de l'aclonifen sur Lolium multiflorum.

L'expérimentation est conduite en ayant semé des graines de Lolium multiflorum.

Le tableau ci-dessous représente la moyenne d'un essai en serre. Pour chaque dose, la valeur supérieure est la valeur obtenue et la valeur inférieure est celle attendue calculée selon Colby.

Isoproturon

| | | 0 | 500 | 1 000 | 2 000 |
|---|---|---|---|---|---|
| | 0 | 0 | 30 | 65 | 50 |
| Aclonifen | 62 | 0 | 60<br>30 | 90<br>65 | 85<br>50 |
| | 125 | 0 | 65<br>30 | 90<br>65 | 95<br>50 |
| | 250 | 0 | 65<br>30 | 90<br>65 | 98<br>50 |

Les résultats indiqués dans le tableau ci-dessus montrent clairement en se référant à la formule indiquée en début de description le degré excellent et inattendu de synergie obtenu avec l'association de l'invention.

Exemple 2 :

Essai montrant la nature de l'effet synergique biologique de l'association de l'isoproturon et de l'aclonifen sur Alopecurus myosuroïdes.

L'expérimentation est conduite en ayant semé des graines d'Alopecurus myosuroïdes.

Le tableau ci-dessous représente la moyenne d'un essai en serre. Pour chaque dose, la valeur supérieure est la valeur obtenue et la valeur inférieure est celle attendue calculée selon Colby.

**Isoproturon**

| | | 0 | 500 | 1 000 | 2 000 |
|---|---|---|---|---|---|
| | 0 | 0 | 20 | 50 | 85 |
| Aclonifen | 62 | 0 | 30<br>20 | 75<br>50 | -<br>- |
| | 125 | 0 | 55<br>20 | 65<br>50 | 83<br>85 |
| | 250 | 0 | 80<br>20 | 85<br>50 | 93<br>85 |

Les résultats indiqués dans le tableau ci-dessous montrent clairement, en se référant à la formule indiquée en début de description le degré excellent et inattendu de synergie obtenue avec l'association de l'invention.

Exemple 3 :

Essai montrant la nature de l'effet synergique biologique de l'association de l'isoproturon et de l'aclonifen sur Agrostis tenuis.

L'expérimentation est conduite en ayant semé des graines d'Agrostis tenuis.

Le tableau ci-dessous représente la moyenne d'un essai en serre. Pour chaque dose, la valeur supérieure est la valeur obtenue et la valeur inférieure est celle attendue calculée selon Colby.

**Isoproturon**

| | | 0 | 500 | 1 000 | 2 000 |
|---|---|---|---|---|---|
| | 0 | 0 | 30 | 90 | 95 |
| Aclonifen | 62 | 0 | 90<br>30 | 100<br>90 | 100<br>95 |
| | 125 | 0 | 95<br>30 | 100<br>90 | 100<br>95 |
| | 250 | 0 | 100<br>30 | 100<br>90 | 100<br>95 |

Les résultats indiqués dans le tableau ci-dessous montrent clairement, en se référant à la formule indiquée en début de description le degré excellent et inattendu de synergie obtenue avec l'association de l'invention.

Exemple 4 :

Essai montrant la nature de l'effet synergique biologique de l'association d'isoproturon et de l'aclonifen sur Lamium purpurea.

L'expérimentation est conduite en ayant semé des graines de Lamium purpurea.

Le tableau ci-dessous représente la moyenne d'un essai en serre. Pour chaque dose, la valeur supérieure est la valeur obtenue et la valeur inférieure est celle attendue calculée selon Colby.

| | | Isoproturon | | | |
|---|---|---|---|---|---|
| | | 0 | 500 | 1 000 | 2 000 |
| | 0 | 0 | 0 | 15 | 20 |
| Aclonifen | 62 | 0 | 20<br>0 | 20<br>15 | 25<br>20 |
| | 125 | 20 | 40<br>20 | 30<br>30 | 40<br>36 |
| | 250 | 20 | 55<br>20 | 50<br>32 | 75<br>36 |

Les résultats indiqués dans le tableau ci-dessous montrent clairement, en se référant à la formule indiquée en début de description le degré excellent et inattendu de synergie obtenue avec l'association de l'invention.

Exemple 5 :

Essai montrant la nature de l'effet synergique biologique de l'association de l'isoproturon et de l'aclonifen sur Viola tricolor.

L'expérimentation est conduite en ayant semé des graines de Viola tricolor.

Le tableau ci-dessous représente la moyenne d'un essai en serre. Pour chaque dose, la valeur supérieure est la valeur obtenue et la valeur inférieure est celle attendue calculée selon Colby.

Isoproturon

| | | 0 | 500 | 1 000 | 2 000 |
|---|---|---|---|---|---|
| | 0 | 0 | 0 | 15 | 20 |
| Aclonifen | 62 | 0 | 15<br>0 | 25<br>15 | 25<br>20 |
| | 125 | 0 | 25<br>0 | 25<br>15 | 30<br>20 |
| | 250 | 15 | 30<br>15 | 30<br>28 | 40<br>32 |

Les résultats indiqués dans le tableau ci-dessous montrent clairement, en se référant à la formule indiquée en début de description le degré excellent et inattendu de synergie obtenue avec l'association de l'invention.

Exemple 6 :

Essai montrant l'absence de phytotoxicité de l'association de l'isoproturon et de l'aclonifen sur le blé ou Triticum aestivum.

L'expérimentation est mise en oeuvre comme précédemment, mais après avoir semé des graines de blé, et conduit aux résultats indiqués ci-dessous :

Isoproturon

| | | 0 | 500 | 1 000 | 2 000 |
|---|---|---|---|---|---|
| | 0 | 0 | 0 | 0 | 0 |
| Aclonifen | 62 | 0 | 0 | 0 | 0 |
| | 125 | 0 | 0 | 0 | 0 |
| | 250 | 0 | 0 | 0 | 0 |

On constate donc que l'association précitée bien qu'augmentant l'activité respective des deux matières actives sur les adventices exemplifiées, ne révèle aucune phytotoxicité sur le blé.

Exemple 7 :

Essai montrant la nature de l'effet synergique biologique de l'association du chlortoluron et de l'aclonifen sur Alopecurus myosuroïdes.

L'expérimentation est conduite en ayant semé des graines d'Alopecurus myosuroïdes.

Le tableau ci-dessous représente la moyenne d'un essai en serre. Pour chaque dose, la valeur supérieure est la valeur obtenue et la valeur inférieure est celle attendue calculée selon Colby.

Chlortoluron

| | | 0 | 500 | 1 000 | 1 500 |
|---|---|---|---|---|---|
| | 0 | 0 | 65 | 70 | 80 |
| Aclonifen | 62 | 0 | 60<br>65 | 97<br>70 | 97<br>80 |
| | 125 | 10 | 70<br>68 | 85<br>73 | 99<br>82 |
| | 250 | 20 | 70<br>72 | 98<br>76 | 100<br>84 |

Les résultats indiqués dans le tableau ci-dessous montrent clairement, en se référant à la formule indiquée en début de description, le degré excellent et inattendu de synergie obtenue avec l'association de l'invention.

Exemple 8 :

Essai montrant la nature de l'effet synergique biologique de l'association du chlortoluron et de l'aclonifen sur Avena fatua.

L'expérimentation est conduite en ayant semé des graines d'Avena fatua.

Le tableau ci-dessous représente la moyenne d'un essai en serre. Pour chaque dose, la valeur supérieure est la valeur obtenue et la valeur inférieure est celle attendue calculée selon Colby.

Chlortoluron

| | | 0 | 500 | 1 000 | 1 500 |
|---|---|---|---|---|---|
| | 0 | 0 | 10 | 55 | 93 |
| Aclonifen | 62 | 0 | 35<br>10 | 75<br>55 | 88<br>93 |
| | 125 | 0 | 35<br>10 | 70<br>55 | 88<br>93 |
| | 250 | 0 | 50<br>10 | 88<br>55 | 90<br>93 |

Les résultats indiqués dans le tableau ci-dessous montrent clairement, en se référant à la formule indiquée en début de description, le degré excellent et inattendu de synergie obtenue avec l'association de l'invention.

Exemple 9 :

Essai montrant la nature de l'effet synergique biologique de l'association du chlortoluron et de l'aclonifen sur Lolium multiflorum.

L'expérimentation est conduite en ayant semé des graines de Lolium multiflorum.

Le tableau ci-dessous représente la moyenne d'un essai en serre. Pour chaque dose, la valeur supérieure est la valeur obtenue et la valeur inférieure est celle attendue calculée selon Colby.

Chlortoluron

| | | 0 | 500 | 1 000 | 1 500 |
|---|---|---|---|---|---|
| | 0 | 0 | 78 | 93 | |
| Aclonifen | 62 | 0 | 100<br>78 | 100<br>93 | |
| | 125 | 5 | 98<br>79 | 100<br>93 | |
| | 250 | 10 | 93<br>80 | 100<br>94 | |

Les résultats indiqués dans le tableau ci-dessous montrent clairement, en se référant à la formule indiquée en début de description, le degré excellent et inattendu de synergie obtenue avec l'association de l'invention.

Exemple 10 :

Essai montrant la nature de l'effet synergique biologique de l'association du chlortoluron et de l'aclonifen sur Viola tricolor.

L'expérimentation est conduite en ayant semé des graines de Viola tricolor.

Le tableau ci-dessous représente la moyenne d'un essai en serre. Pour chaque dose, la valeur supérieure est la valeur obtenue et la valeur inférieure est celle attendue calculée selon Colby.

Chlortoluron

| | | 0 | 500 | 1 000 | 1 500 |
|---|---|---|---|---|---|
| | 0 | 0 | 0 | 15 | 25 |
| Aclonifen | 62 | 0 | 20<br>0 | 35<br>15 | 60<br>25 |
| | 125 | 0 | 30<br>0 | 60<br>15 | 65<br>25 |
| | 250 | 5 | 35<br>5 | 70<br>19 | 85<br>29 |

Les résultats indiqués dans le tableau ci-dessous montrent clairement, en se référant à la formule indiquée en début de description, le degré excellent et inattendu de synergie obtenue avec l'association de l'invention.

Exemple 11 :

Essai montrant la nature de l'effet synergique biologique de l'association du chlortoluron et de l'aclonifen sur Galium aparine.

L'expérimentation est conduite en ayant semé des graines de Galium aparine.

Le tableau ci-dessous représente la moyenne d'un essai en serre. Pour chaque dose, la valeur supérieure est la valeur obtenue et la valeur inférieure est celle attendue calculée selon Colby.

Chlortoluron

| | | 0 | 500 | 1 000 | 1 500 |
|---|---|---|---|---|---|
| | 0 | 0 | 15 | 25 | 45 |
| Aclonifen | 62 | 0 | 30<br>15 | 40<br>25 | 65<br>45 |
| | 125 | 0 | 45<br>15 | 70<br>25 | 80<br>45 |
| | 250 | 15 | 60<br>28 | 70<br>36 | 70<br>53 |

Les résultats indiqués dans le tableau ci-dessous montrent clairement, en se référant à la formule indiquée en début de description, le degré excellent et inattendu de synergie obtenue avec l'association de l'invention.

Exemple 12 :

Essai montrant l'absence de phytotoxicité de l'association du chlortoluron et de l'aclonifen sur le blé ou Triticum aestivum.

L'expérimentation est mise en oeuvre comme précédemment, mais après avoir semé des graines de blé, et conduit aux résultats indiqués dans le tableau ci-dessous :

Chlortoluron

| | | 0 | 500 | 1 000 | 1 500 |
|---|---|---|---|---|---|
| | 0 | 0 | 0 | 0 | 0 |
| Aclonifen | 62 | 0 | 0 | 0 | 0 |
| | 125 | 0 | 5 | 0 | 0 |
| | 250 | 0 | 5 | 0 | 0 |

On constate donc que l'association précitée, bien qu'augmentant l'activité respective des deux matières actives sur les adventices exemplifiées, ne révèle aucune phytotoxicité sur le blé.

Exemple 13 :

Essai montrant la nature de l'effet synergique biologique de l'association du diméfuron et de l'aclonifen sur Sinapis alba.

L'expérimentation est conduite en ayant semé des graines de Sinapis alba.

Le tableau ci-dessous représente la moyenne d'un essai en serre. Pour chaque dose, la valeur supérieure est la valeur obtenue et la valeur inférieure est celle attendue calculée selon Colby.

Diméfuron

| | | 0 | 500 | 1 000 | 2 000 |
|---|---|---|---|---|---|
| | 0 | 0 | 10 | 45 | 70 |
| Aclonifen | 62 | 0 | 35<br>10 | 93<br>45 | 100<br>70 |
| | 125 | 20 | 80<br>28 | 98<br>56 | 100<br>76 |
| | 250 | 30 | 70<br>37 | 100<br>61 | 100<br>79 |

Les résultats indiqués dans le tableau ci-dessous montrent clairement, en se référant à la formule indiquée en début de description, le degré excellent et inattendu de synergie obtenue avec l'association de l'invention.

Exemple 14 :

Essai montrant la nature de l'effet synergique biologique de l'association du diméfuron et de l'aclonifen sur Viola tricolor.

L'expérimentation est conduite en ayant semé des graines de Viola tricolor.

Le tableau ci-dessous représente la moyenne d'un essai en serre. Pour chaque dose, la valeur supérieure est la valeur obtenue et la valeur inférieure est celle attendue calculée selon Colby.

Diméfuron

| | | 0 | 500 | 1 000 | 2 000 |
|---|---|---|---|---|---|
| | 0 | 0 | 25 | 45 | 85 |
| Aclonifen | 62 | 0 | 25<br>25 | 50<br>45 | 95<br>85 |
| | 125 | 0 | 30<br>25 | 70<br>45 | 95<br>85 |
| | 250 | 10 | - | 83<br>50 | 100<br>86 |

Les résultats indiqués dans le tableau ci-dessous montrent clairement, en se référant à la formule indiquée en début de description, le degré excellent et inattendu de synergie obtenue avec l'association de l'invention.

Exemple 15 :

Essai montrant la nature de l'effet synergique biologique de l'association du diméfuron et de l'aclonifen sur Lolium multiforum.

L'expérimentation est conduite en ayant semé des graines de Lolium multiflorum.

Le tableau ci-dessous représente la moyenne d'un essai en serre. Pour chaque dose, la valeur supérieure est la valeur obtenue et la valeur inférieure est celle attendue calculée selon Colby.

Diméfuron

| | | 0 | 500 | 1 000 | 2 000 |
|---|---|---|---|---|---|
| | 0 | 0 | 10 | 25 | 60 |
| Aclonifen | 62 | 0 | 15<br>10 | 35<br>25 | 80<br>60 |
| | 125 | 0 | 20<br>10 | 55<br>25 | 65<br>60 |
| | 250 | 5 | 20<br>14 | 55<br>29 | 65<br>62 |

Les résultats indiqués dans le tableau ci-dessous montrent clairement, en se référant à la formule indiquée en début de description, le degré excellent et inattendu de synergie obtenue avec l'association de l'invention.

Exemple 16 :

Essai montrant la nature de l'effet synergique biologique de l'association du diméfuron et de l'aclonifen sur Veronica Persica.

L'expérimentation est conduite en ayant semé des graines de Veronica Persica.

Le tableau ci-dessous représente la moyenne d'un essai en serre. Pour chaque dose, la valeur supérieure est la valeur obtenue et la valeur inférieure est celle attendue calculée selon Colby.

**Diméfuron**

| | | 0 | 500 | 1 000 | 2 000 |
|---|---|---|---|---|---|
| | 0 | 0 | 55 | 97 | 100 |
| **Aclonifen** | 62 | 0 | 68<br>55 | 80<br>97 | 100<br>100 |
| | 125 | 5 | 100<br>57 | 100<br>97 | 100<br>100 |
| | 250 | 5 | 88<br>57 | 94<br>97 | 100<br>100 |

Les résultats indiqués dans le tableau ci-dessous montrent clairement, en se référant à la formule indiquée en début de description, le degré excellent et inattendu de synergie obtenue avec l'association de l'invention.

EXEMPLE 17

Essai montrant la nature de l'effet synergique de l'association de l'aclonifen et du méthabenzthiazuron.

L'essai est fait en plein air sur des parcelles de 2*5 m,sous forme de bandes,semées avec deux cultures et une gamme d'adventices en bandes,avec trois répétitions par essai.D'autres adventices sont présentes naturellement.

Le traitement est effectué lorsque la culture et les adventices sont au stade de une talle complètement développée

à trois talles pour les monocotylédones et du stade cotylédonaire au stade plantule pour les dicotylédones.

Les parcelles sont traitées avec un pulvérisateur d'essai,monté sur un tracteur avec un débit de 195l/ha,en utilisant respectivement l'aclonifen sous forme d'une suspension à 600g/l(CHALLENGE 600),le méthabenzthiazuron sous forme liquide à 700g/l(TRIBUNIL),respectivement seuls et en mélange.

Au bout de 60 jours,on évalue visuellement le pourcentage d'adventices présent,par comparaison avec un témoin non traité (O = pas d'effet, 100 = destruction complète) sur Galium aparine,Avena fatua,et sur du blé d'hiver et de l'orge d'hiver.

Le tableau ci dessous représente la moyenne des résultats des trois répétitions par essai.Pour chaque dose est donné le résultat, observé en comparaison avec le résultat attendu en appliquant la formule de Colby.

| | % Destruction Galuim aparine | | % Destruction Avena fatua | |
|---|---|---|---|---|
| Matière Active gma/ha | Effectif | Attendu | Effectif | Attendu |
| Aclonifen 250 | 33 | | 33 | |
| Aclonifen 500 | 45 | | 45 | |
| Méthabenzthiazuron 2000 | 6 | | 72 | |
| Aclonifen 250 + Méthabenzthiazuron 2000 | 85 | 37 | 93 | 81 |
| Aclonifen 500 + Méthabenzthiazuron 2000 | 94 | 48 | 94 | 84 |

Ce tableau montre clairement le comportement synergique inattendu de l'association ci-dessus.

## Revendications

1. Produit herbicide résultant de l'association synergique de a) 2-chloro 6-nitro 3-phenoxy aniline dont la dénomination commune officielle est aclonifen, et b) d'une ou plusieurs urées substituées de formule :

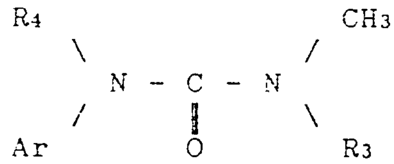

(I)

dans laquelle Ar est un noyau de formule

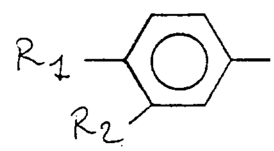

$R_1$ étant choisi parmi les radicaux ($C_1$ -$C_3$) alkyle, ($C_1$ -$C_3$) alkoxy, l'atome de chlore, de brome, un groupe 5-ter-butyl-2,3-dihydro-2-oxo-1,3,4-oxadiazol-3-yl de formule

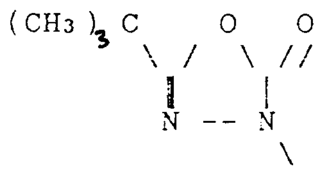

$R_2$ étant choisi parmi l'atome d'hydrogène, l'atome de chlore,
où Ar est un noyau

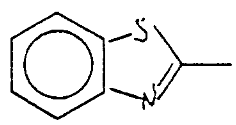

$R_3$ est l'atome d'hydrogène, le radical ($C_1$ -$C_4$) alkyle, méthoxy,
$R_4$ est l'atome d'hydrogène ou le radical méthyle, caractérisé en ce que le rapport en poids de l'aclonifen à l'urée substituée est compris entre 0,033 et 0,333.

**2.** Produit selon la revendication 1, caractérisé en ce que les urées substituées sont choisies parmi :
l'isoproturon ou 3-(4-isopropylphenyl)-1,1-dimethylurée,
le chlortoluron ou 3-(3-chloro-p-totyl)-1,1-diméthylurée,
le néburon ou 1-butyl-3-(3,4-dichlorophényl)-1-méthylurée,
le diuron ou 3-(3,4-dichlorophényl)-1,1-diméthylurée,
le metoxuron ou 3-(3-chloro-4-méthoxyphényl)-1,1 diméthylurée,
le linuron ou 3-(3,4-dichlorophényl)-1-méthoxy-1-méthylurée,
le monolinuron ou 3-(4-chlorophényl)-1-méthoxy-1-méthylurée,
le méthabenzthiazuron ou 1-benzothiazol-2-yl-1,3-diméthylurée,
le métobromuron ou 3-(4-bromophényl)-1-méthoxy-1-méthylurée,
le diméfuron ou 3-[4-(5-ter-butyl-2,3-dihydro-2-oxo-1,3,4-oxadiazol-3-yl)-3-chlorophényl-1,1-diméthylurée.

**3.** Produit selon la revendication 2, caractérisé en ce que l'urée est le 3-(4-isopropylphényl)-1,1-diméthylurée (ou isoproturon) ou le 3-(3-chloro-p-totyl)-1,1-diméthylurée (ou chlortoluron).

**4.** Produit selon la revendication 1, pour une utilisation simultanée, séparée ou étalée dans le temps pour le traitement des végétaux indésirables ou adventices dans les cultures.

5. Produit selon la revendication 1, caractérisée en ce qu'il comprend une dose non herbicide d'aclonifen.

6. Utilisation de l'aclonifen à titre d'amplificateur de l'activité de l'urée dans un produit selon la revendication 5.

7. Composition herbicide contenant un produit selon l'une des revendications 1 à 5, au moins un support inerte et/ou au moins un agent tensio actif.

8. Composition herbicide, selon la revendication 7, caractérisée en ce qu'elle contient entre 0,5 et 95 % de produit selon l'une des revendications 1 à 5.

9. Procédé de contrôle des mauvaises herbes en post-levée des cultures, caractérisé en ce que l'on applique à l'endroit une dose efficace d'un produit selon l'une des revendications 1 à 5.

10. Procédé de contrôle selon la revendication 9, caractérisé en ce que les adventices contrôlées sont :
Galium apaarine, Avena fatua, Lolium multiflorum, Viola tricolor, Sinapis alba, Lamium purpurea, Veronica persica, Agrostis tennis, Alopecurus myosuroïdes.

11. Procédé de contrôle selon la revendication 9, caractérisé en ce que le produit est appliqué à raison de 460 à 5000 g/ha.

12. Procédé de contrôle selon la revendication 9, caractérisée en ce que l'on applique l'association 3-(4-isopropylphényl)-1,1-diméthylurée ou isoproturon et aclonifen, à raison de :
60 à 600 g/ha d'aclonifen,
400 à 3 600 g/ha d'isoproturon,
et en ce que les cultures sont les céréales.

13. Procédé de contrôle selon la revendication 12, caractérisé en ce que l'on applique :
100 à 500 d'aclonifen,
500 à 3 000 d'isoproturon.

14. Procédé de contrôle selon la revendication 9, caractérisé en ce que l'on applique l'association chlortoluron ou 3-(3-chloro-p-totyl)-1,1-diméthylurée et aclonifen à raison de :
60 à 600 g/ha d'aclonifen,
400 à 3 600 g/ha de chlortoluron,
et en ce que les cultures sont les céréales.

15. Procédé de contrôle selon la revendication 14, caractérisé en ce que l'on applique l'association à raison de :
100 à 500 g/ha d'aclonifen,
500 à 3 000 g/ha de chlortoluron.

16. Procédé de contrôle selon la revendication 9, caractérisé en ce que l'on applique l'aasociation diméfuron ou N,N-diméthyl-N'-[3-chloro-4-(5-tertiobutyl-2-oxo-2,3-dihydro 1,3,4-oxadiazolyl-3-yl) phényl] urée et aclonifen à raison de :
60 à 600 g/ha d'aclonifen,
400 à 3 600 g/ha de diméfuron,
et que les cultures sont le colza ou le pois.

17. Procédé de contrôle selon la revendication 16, caractérisé en ce que l'on applique l'association à raison de :
100 à 500 g/ha d'aclonifen,
500 à 2 000 g/ha de diméfuron.

18. Procédé de contrôle selon l'une des revendications 9 à 11, caractérisé en ce que l'on applique l'association à raison de :
60 à 1000 g/ha d'aclonifen
500 à 4 000 g/ha de méthabenzthiazuron

**19.** Procédé de contrôle selon la revendication 18, caractérisé en ce que l'on applique l'association à raison de :

100 à 500 g/ha d'aclonifen

1 000 à 3 000 g/ha de méthabenzthiazuron.

## Claims

**1.** Herbicidal product which results from the synergistic combination of a) 2-chloro-6-nitro-3-phenoxyaniline, whose official common name is aclonifen, and b) one or more substituted ureas of the formula:

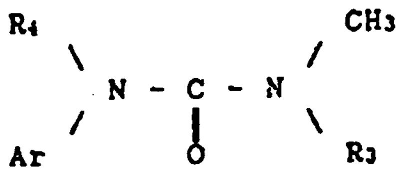

(I)

in which Ar is a ring of the formula

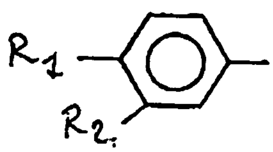

$R_1$ being selected from amongst ($C_1$-$C_3$) alkyl radicals, ($C_1$-$C_3$) alkoxy radicals, a chlorine atom, a bromine atom, a 5-tert-butyl-2,3-dihydro-2-oxo-1,3,4-oxadiazol-3-yl group of the formula

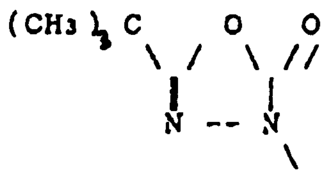

$R_2$ being selected from amongst a hydrogen atom, a chlorine atom,

where Ar is a ring

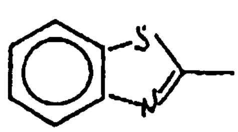

$R_3$ is a hydrogen atom, a ($C_1$-$C_4$) alkyl or methoxy radical,

$R_4$ is a hydrogen atom or a methyl radical, characterized in that the ratio by weight of aclonifen to substituted urea is between 0.033 and 0.333.

**2.** Product according to claim 1, characterized in that the substituted ureas are selected from amongst:

isoproturon, or 3-(4-isopropylphenyl)-1,1-dimethylurea,

chlortoluron, or 3-(3-chloro-p-tolyl)-1,1-dimethylurea,

neburon, or 1-butyl-3-(3,4-dichlorophenyl)-1-methylurea,

diuron, or 3-(3,4-dichlorophenyl)-1,1-dimethylurea,

metoxuron, or 3-(3-chloro-4-methoxyphenyl)-1,1-dimethylurea,

linuron, or 3-(3,4-dichlorophenyl)-1-methoxy-1-methylurea;
monolinuron, or 3-(4-chlorophenyl)-1-methoxy-1-methylurea,
methabenzthiazuron, or 1-benzothiazol-2-yl-1,3-dimethylurea,
metobromuron, or 3-(4-bromophenyl)-1-methoxy-1-methylurea, and
dimefuron, or 3-[4-(5-tert-butyl-2,3-dihydro-2-oxo-1,3,4-oxadiazol-3-yl)-3-chlorophenyl-1,1-dimethylurea.

**3.** Product according to claim 2, characterized in that the urea is 3-(4-isopropylphenyl)-1,1-dimethylurea (or isoproturon)or 3-(3-chloro-p-tolyl)-1,1-dimethylurea (or chlortoluron).

**4.** Product according to claim 1, for simultaneous or separate use or use staggered over time, for treating undesirable plants or weeds in crops.

**5.** Product according to claim 1, characterized in that it comprises a dosage rate of aclonifen which is not herbicidal.

**6.** Use of aclonifen as amplifier of the activity of the urea in a product according to claim 5.

**7.** Herbicidal composition, comprising a product according to one of claims 1 to 5, at least one inert carrier and/or at least one surfactant.

**8.** Herbicidal composition according to claim 7, characterized in that it comprises between 0.5 and 95% of product according to one of claims 1 to 5.

**9.** Method of controlling weeds post-emergence of the crops, characterized in that an effective dose of a product according to one of claims 1 to 5 is applied to the location.

**10.** Control method according to claim 9, characterized in that the weeds controlled are: Galium aparine, Avena fatua, Lolium multiflorum, Viola tricolor, Sinapis alba, Lolium purpurea, Veronica persica, Agrostis tenuis, Alopecurus myosuroides.

**11.** Control method according to claim 9, characterized in that the product is applied at a rate of 460 to 5000 g/ha.

**12.** Control method according to claim 9, characterized in that the combination of 3-(4-isopropylphenyl)-1,1-dimethylurea, or isoproturon, with aclonifen is applied at a rate of:
60 to 600 g/ha aclonifen,
400 to 3600 g/ha isoproturon,
and in that the crops are cereals.

**13.** Control method according to claim 12, characterized in that
100 to 500 g/ha aclonifen,
500 to 3000 g/ha isoproturon
are applied.

**14.** Control method according to claim 9, characterized in that the combination of chlortoluron, or 3-(3-chloro-p-tolyl)-1,1-dimethylurea, with aclonifen is applied at a rate of:
60 to 600 g/ha aclonifen,
400 to 3600 g/ha chlortoluron,
and in that the crops are cereals.

**15.** Control method according to claim 14, characterized in that the combination is applied at a rate of:
100 to 500 g/ha aclonifen,
500 to 3000 g/ha chlortoluron.

**16.** Control method according to claim 9, characterized in that the combination of dimefuron, or N,N-dimethyl-N'-[3-chloro-4-(5-tert-butyl-2-oxo-2,3-dihydro-1,3,4-oxadiazolyl-3-yl)phenyl]urea, with aclonifen is applied at a rate of:

60 to 600 g/ha aclonifen,
400 to 3600 g/ha dimefuron,
and in that the crops are oilseed rape or peas.

**17.** Control method according to claim 16, characterized in that the combination is applied at a rate of:
100 to 500 g/ha aclonifen,
500 to 2000 g/ha dimefuron.

**18.** Control method according to one of claims 9 to 11, characterized in that the combination is applied at a rate of:
60 to 1000 g/ha aclonifen,
500 to 4000 g/ha of methabenzthiazuron.

**19.** Control method according to claim 18, characterized in that the combination is applied at a rate of:
100 to 500 g/ha aclonifen,
1000 to 3000 g/ha methabenzthiazuron.

**Patentansprüche**

**1.** Herbizides Produkt resultierend aus der synergistischen Kombination von a) 2-Chlor-6-nitro-3-phenoxyanilin, dessen offizielle allgemeine Kurzbezeichnung Aclonifen lautet, und b) einem oder mehreren substituierten Harnstoffen der Formel:

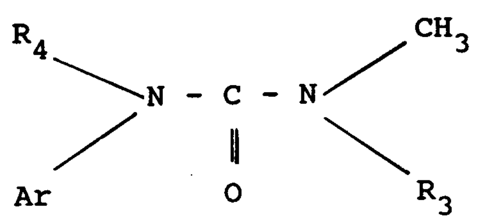

(I)

in der Ar ein Kern der Formel

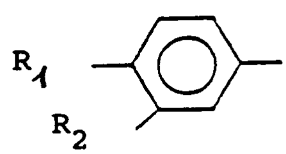

ist, wobei $R_1$ ausgewählt ist aus den ($C_1$-$C_3$)-Alkylgruppen, ($C_1$-$C_3$)-Alkoxygruppen, Chlor- und Bromatom oder der Gruppe 5-tert.-Butyl-2,3-dihydro-2-oxo-1,3,4-oxadiazol-3-yl der Formel

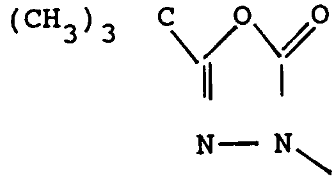

$R_2$ ausgewählt ist aus dem Wasserstoff- und Chloratom,
oder worin Ar ein Kern

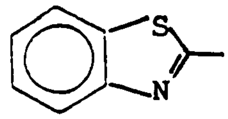

ist,

$R_3$ für ein Wasserstoffatom, eine ($C_1$-$C_4$)-Alkylgruppe oder die Methoxygruppe steht, und

$R_4$ ein Wasserstoffatom oder die Methylgruppe ist,

dadurch **gekennzeichnet,** daß

das Gewichtsverhältnis von Aclonifen zu substituiertem Harnstoff im Bereich von 0,033 bis 0,333 liegt.

**2.** Produkt nach Anspruch 1,
dadurch **gekennzeichnet,** daß
die substituierten Harnstoffe ausgewählt sind aus:
Isoproturon oder 3-(4-Isopropylphenyl)-1,1,-dimethylharnstoff,
Chlortoluron oder 3-(3-Chlor-p-tolyl)-1,1-dimethylharnstoff,
Neburon oder 1-Butyl-3-(3,4-dichlorphenyl)-1-methylharnstoff,
Diuron oder 3-(3,4-Dichlorphenyl)-1,1-dimethylharnstoff,
Metoxuron oder 3-(3-Chlor-4-methoxyphenyl)-1,1-dimethylharnstoff,
Linuron oder 3-(3,4-Dichlorphenyl)-1-methoxy-1-methylharnstoff,
Monolinuron oder 3-(4-Chlorphenyl)-1-methoxy-1-methylharnstoff,
Methabenzthiazuron oder 1-Benzothiazol-2-yl-1,3-dimethylharnstoff,
Metobromuron oder 3-(4-Bromphenyl)-1-methoxy-1-methylharnstoff,
Dimefuron oder 3-[4-(5-tert.-Butyl-2,3-dihydro-2-oxo-1,3,4-oxadiazol-3-yl)-3-chlorphenyl-1,1-dimethylharnstoff.

**3.** Produkt nach Anspruch 2,
dadurch **gekennzeichnet,** daß
der Harnstoff 3-(4-Isopropylphenyl)-1,1-dimethylharnstoff (oder Isoproturon), oder 3-(3-Chlor-p-tolyl)-1,1-dimethylharnstoff (oder Chlortoluron) ist.

**4.** Produkt nach Anspruch 1 für gleichzeitigen, getrennten oder zeitversetzten Einsatz bei der Behandlung von unerwünschten Pflanzen oder Unkräutern in Kulturen.

**5.** Produkt nach Anspruch 1,
dadurch **gekennzeichnet,** daß
es eine nicht herbizide Dosis Aclonifen enthält.

**6.** Verwendung von Aclonifen als Verstärker der Aktivität des Harnstoffs in einem Produkt nach Anspruch 5.

**7.** Herbizides Mittel, enthaltend ein Produkt nach einem der Ansprüche 1 bis 5, mindestens einen inerten Träger und/oder mindestens ein grenzflächenaktives Mittel.

**8.** Herbizides Mittel nach Anspruch 7,
dadurch **gekennzeichnet,** daß
es 0,5 bis 95 % Produkt gemäß einem der Ansprüche 1 bis 5 enthält.

**9.** Verfahren zum Bekämpfen von Unkräutern nach dem Auflaufen der Kulturen,
dadurch **gekennzeichnet,** daß
man auf den Ort des Vorkommens eine wirksame Dosis eines Produktes nach einem der Ansprüche 1 bis 5 aufbringt.

**10.** Verfahren zur Bekämpfung nach Anspruch 9,
dadurch **gekennzeichnet,** daß
es sich bei den bekämpften Unkräutern handelt um: Galium aparine, Avena fatua, Lolium multiflorum, Viola tricolor, Sinapis alba, Lamium purpurea, Veronica persica, Agrostis tennis, Alopecurus myosuroides.

**11.** Verfahren zur Bekämpfung nach Anspruch 9,
dadurch **gekennzeichnet,** daß
das Produkt in einer Menge von 460 bis 5000 g/ha angewandt wird.

**12.** Verfahren zur Bekämpfung nach Anspruch 9,
dadurch **gekennzeichnet,** daß
man die Kombination aus 3-(4-Isopropylphenyl)-1,1-dimethylharnstoff oder Isoproturon und Aclonifen in einer Menge von:
60 bis 600 g/ha Aclonifen und
400 bis 3 600 g/ha Isoproturon
anwendet, und daß es sich bei den Kulturen um Getreidekulturen handelt.

**13.** Verfahren zur Bekämpfung nach Anspruch 12,
dadurch **gekennzeichnet,** daß
man:
100 bis 500 (g/ha) Aclonifen und
500 bis 3 000 (g/ha) Isoproturon
anwendet.

**14.** Verfahren zur Bekämpfung nach Anspruch 9,
dadurch **gekennzeichnet,** daß
man die Kombination aus Chlortoluron oder 3-(3-Chlor-p-tolyl)-1,1-dimethylharnstoff und Aclonifen in einer Menge von:
60 bis 600 g/ha Aclonifen und
400 bis 3 600 g/ha Chlortoluron
anwendet, und daß es sich bei den Kulturen um Getreidekulturen handelt.

**15.** Verfahren zur Bekämpfung nach Anspruch 14,
dadurch **gekennzeichnet,** daß
man die Kombination in einer Menge von
100 bis 500 g/ha Aclonifen und
500 bis 3 000 g/ha Chlortoluron
anwendet.

**16.** Verfahren zur Bekämpfung nach Anspruch 9,
dadurch **gekennzeichnet,** daß
man die Kombination aus Dimefuron oder N,N-Dimethyl-N'-[3-chlor-4-(5-tert.butyl-2-oxo-2,3-dihydro-1,3,4-oxadiazolyl-3-yl)phenyl]harnstoff und Aclonifen in einer Menge von:
60 bis 600 g/ha Aclonifen und
400 bis 3 600 g/ha Dimefuron
anwendet, und daß es sich bei den Kulturen um Raps oder Erbsen handelt.

**17.** Verfahren zur Bekämpfung nach Anspruch 16,
dadurch **gekennzeichnet,** daß
man die Kombination in einer Menge von:
100 bis 500 g/ha Aclonifen und
500 bis 2 000 g/ha Dimefuron
anwendet.

**18.** Verfahren zur Bekämpfung nach einem der Ansprüche 9 bis 11,
dadurch **gekennzeichnet,** daß
man die Kombination in einer Menge von:
60 bis 1 000 g/ha Aclonifen und
500 bis 4 000 g/ha Methabenzthiazuron
anwendet.

**19.** Verfahren zur Bekämpfung nach Anspruch 18, dadurch **gekennzeichnet,** daß man die Kombination in einer Menge von:

100 bis 500 g/ha Aclonifen und

1 000 bis 3 000 g/ha Methabenzthiazuron

anwendet.